# EUROPEAN PATENT APPLICATION

(11) **EP 1 570 936 A1**
(43) Date of publication of application: **07.09.2005**
(21) Application number: 05101662.4
(22) Date of filing: 03.03.2005
(51) Int. Cl.: B23D 61/02

(54) **Cutting wheel with blank and manufacturing method thereof**

(30) Priority: 05.03.2004 KR 2004015191; 23.09.2004 KR 2004076567
(71) Applicant: SHINHAN DIAMOND INDUSTRIAL CO., LTD., Incheon 405-100 (KR)
(72) Inventor: WOO, Jong Hyuk, 405-241, Namdong-Gu, Incheon (KR); LEE, Hwan Chul, 406-132, Yeonsu-Gu, Incheon (KR); KWON, Eung Kwan, 405-300, Namdong-Gu, Incheon (KR); PYUN, Seo Pong, 406-111, Yeonsu-Gu, Incheon (KR); PARK, Mun Seok, 405-735, Namdong-Gu, Incheon (KR); LEE, Sang Jin, 406-130, Yeonsu-Gu, Incheon (KR); JEONG, Jae Hyun, 403-854, Bupyeong-Gu, Incheon (KR); KIM, Shin Kyung, 135-110, Gangnam-Gu, Seoul (KR)
(74) Representative: Kietzmann, Lutz

(57) **Abstract**

The present invention relates to a cutting wheel with blanks (18) which reduces vibration and frictional noise generated when a workpiece such as stone, steel concrete, asphalt, metal, ceramic, or wood is cut, and a method for manufacturing the same. There is provided a cutting wheel of which a wheel body (13) is formed with at least one blank (18). The blank (18) is shaped in a line with a variable width, and the blank (18) is filled with noise absorbing material. According to the present invention, the noise and vibration is considerably decreased as compared with a general plane type cutting wheel and a conventional cutting wheel with blanks. In addition, the cutting wheel with blanks according to the present invention can absorb the noise and vibration as good as the sandwich type cutting wheel (10a,10b), and particularly, is considerably high in strength, and is inexpensive to manufacture with 1/2 to 1/3 costs compared with the sandwich type cutting wheel

## Description

### BACKGROUND OF THE INVENTION

### 1. Field of Invention

The present invention relates to a cutting wheel with blank and a method for manufacturing the same, and more particularly, to a cutting wheel with blank with an improved aesthetic appearance, which reduces vibration and frictional noise generated when a cutting wheel is used for cutting workpieces, and a method for manufacturing the same. Hereinafter, the cutting wheel is a concept generally including a diamond cutting wheel used for cutting workpieces of hard materials such as stone, steel concrete, asphalt, metal, and ceramic, a cutting wheel with cemented carbide tips used for cutting workpieces such as wood and plastic, or the like.

### 2. Description of the Prior Art

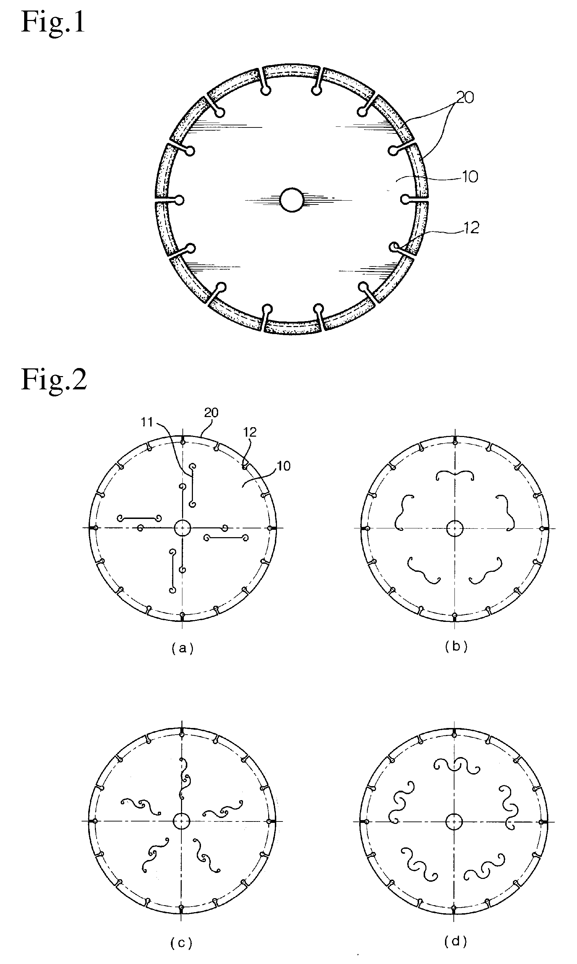

Generally, as shown in Fig. 1, a cutting wheel is used for cutting workpieces such as stone, steel concrete, asphalt, metal, ceramic, and wood. The general cutting wheel comprises a circular disk shaped wheel body 10 and cutting tip s 20 which are bonded onto an outer peripheral surface of the wheel body 10 at regular intervals. A circumferential portion of the wheel body 10 is divided by gaps 12 radially formed between the cutting tips 20. The cutting tips 20 are manufactured by performing a press forming process of a mixture of diamond and metal and sintering the mixture. The cutting tips 20 may also be manufactured of cemented carbide. Since the cutting wheel cuts the workpiece while rotating at several hundred to thousand rpm, a work noise therefrom ordinarily exceeds 100 dB. Frictional heat caused from friction between the cutting wheel and the workpiece considerably influences the life span of the cutting wheel.

Particularly, as a cut depth of the workpiece increases, a contact area between the cut portion of the workpiece and the cutting wheel also increases. Such an increase of the contact area severely increases an impact and a frictional noise generated from the wheel body 10 of the cutting wheel as well as the frictional heat. It is pointed out as a most important factor burdening users. As a prior art for reducing the noise of the cutting wheel shown in Fig. 2, blanks for absorbing or blocking the noise are generally formed in the wheel body 10 in a combined shape of curved and straight lines.

That is, in order to reduce the noise, a conventional blank 11 are formed in the wheel body 10 in the line shape by a laser cutting method as shown in Fig. 2, and then, filled with silicone. However, as use time of the cutting wheel increases, the silicone with which the blank 11 are filled may be removed therefrom due to the impact, vibration, and/or frictional heat. Thus, the noise reducing effect becomes more deteriorated as compared with the initial state.

Furthermore, the blanks 11 formed in the wheel body 10 by the conventional method are slight in size and are formed so as not to intersect all of radial lines from the center of the wheel body 10. Thus, since the capacity for reducing noises generated from all the directio ns of the cutting wheel is not so high, the noises considerably increase.

In the meantime, in order to solve the problems of the frictional heat and noise of the general cutting wheel shown Fig. 1, cutting wheels as shown in Figs. 3 and 4 have also been suggested.

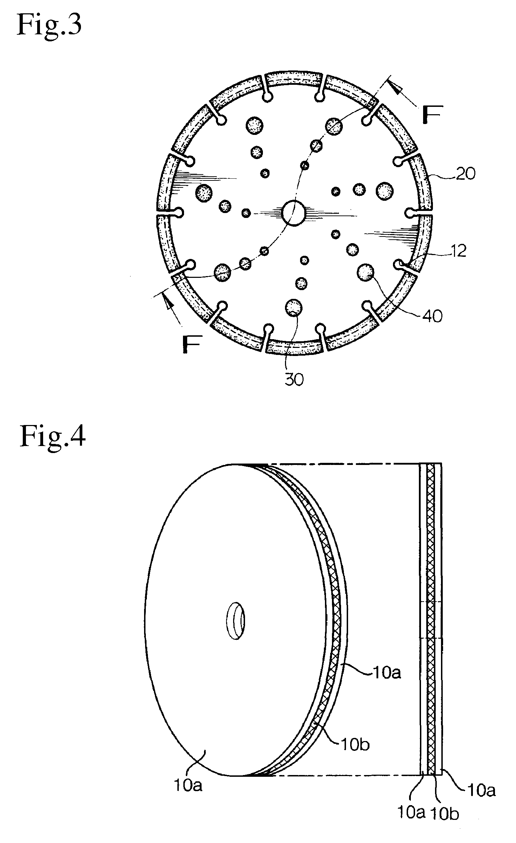

First, Korean Utility Model Laid-Open Publication No. 1999-0040662 discloses a cutting wheel for absorbing and reducing a frictional noise and vibration generated when a workpiece is cut, as shown in Fig. 3. In the cutting wheel, a circular disk shaped body 10 is formed with a plurality of holes 30, which are the same or different from each other in size and/or shape, at regular or irregular intervals. Then, the holes 30 are filled and engaged with low melting metal 40 by a sintering or press forming process.

However, although the cutting wheel, in which the plurality of the holes 30 formed in the body 10 are filled with the low melting metal 40 as described above, can cause the frictional noise to reduce somewhat, the configuration cannot absorb and reduce the frictional noises generated from all the directions of the cutting wheel since the holes 30 are not intersected by all of radial lines from the center to the circumference of the wheel body 10. Furthermore, in the prior art, if a series of the holes 30 are formed in the wheel body 10 so as to be intersected by all of the radial lines from the center to the circumference of the wheel body 10, the cutting wheel may be easily damaged during use since strength of the wheel body 10 is deteriorated.

In the meantime, in order to improve the capacity for reducing the noise of the cutting wheel, a sandwich type cutting wheel shown in Fig. 4 has been developed and employed.

That is, the sandwich type cutting wheel is configured such that a copper plate 10b having superior heat conductivity and noise reducing capacity is interposed between a pair of wheel bodies 10a of steel and they are bonded by spot welding. However, the sandwich type cutting wheel causes the manufacturing costs to increase at least two or three times as compared with a conventional wheel body 10. In addition, since the wheel bodies 10a of steel on both sides of the copper plate 10b is thin and strength of the copper plate 10b is considerably low, a wobbling phenomenon occurs which causes the wheel bodies 10a to flap and vibrate during the use. Thus, the cutting operation of the workpiece cannot be preferably performed. Furthermore, although the cutting operation is performed, there is a problem in that the life span of the cutting wheel is reduced since the cutting wheel is easily plastically deformed.

### SUMMARY OF THE INVENTION

The present invention is conceived to solve the aforementioned problems in the prior art. Accordingly, an object of the present invention is to provide a cutting wheel with blanks which makes it possible to maintain a strength at above a predetermined level and to considerably reduce a frictional noise by forming blanks, which include narrower portions with a constant width and wider portions, in a wheel body and then by filling the blanks with noise absorbing material, and a method for manufacturing the same.

According to an aspect of the present invention for achieving the objects, there is provided a cutting wheel of which a wheel body is formed with at least one blank. The blank is shaped in a line with a variable width, and the blank is filled with noise absorbing material.

Preferably, there are a plurality of the blanks, and any radial line of the wheel body intersects at least one of the blanks.

More preferably, one ends of two of the blanks adjacent to each other are intersected by any one radial line of the wheel body.

The blank may comprise narrower portions shaped in a line with a constant width and wider portions wider than the narrower portions, the narrower portions and the wider portions are alternately arranged.

The wider portions may be provided at both ends and a center of the blank.

The noise absorbing material may include urethane, thermosetting resin, thermoplastic resin, metal, natural rubber, synthetic rubber or mixture of at least two thereof.

The metal may include copper or copper alloy powder.

A plating or adhesive layer may be formed on an inner surface of the blank.

The blank may be shaped in a curved line.

According to another aspect of the present invention, there is provided a method for manufacturing a cutting wheel. The method comprises steps of: forming at least one blank shaped in a line with a variable width; preparing noise absorbing material to be filled in the blank; and filling the blank with the noise absorbing material.

Preferably, there are a plurality of the blanks, and any radial line of a wheel body of the cutting wheel intersects at least one of the blanks.

More preferably, the method further comprises the step of forming a plating or adhesive layer on an inner surface of the blank before the blank is filled with the noise absorbing material.

The step of preparing the noise absorbing material may comprise the step of mixing at least one of urethane, thermosetting resin, and metal powder and hardening agent at a ratio of 1:1. In such a case, the method may further comprise the step of curing the noise absorbing material after the step of filling the blanks with the noise absorbing material.

The step of preparing the noise absorbing material may comprise the steps of mixing at least one of urethane and thermosetting resin and hardening agent at a ratio of 1:1 and mixing it with metal powder at a ratio of 1:1.5. In such a case, the method may further comprise the step of curing the noise absorbing material after the step of filling the blanks with the noise absorbing material.

The step of curing the noise absorbing material may include the step of heating the noise absorbing material for 1 to 6 hours at 70 to 150 °C.

The step of preparing the noise absorbing material may comprise the step of melting the noise absorbing material to flow into the blank. In such a case, the method may further comprise the step of curing the molten noise absorbing material after the step of filling the blank.

When thermoplastic resin, natural rubber, synthetic rubber or mixture of at least two thereof is used as the noise absorbing material, the step of preparing the noise absorbing material may comprise the step of cutting the noise absorbing material with a predetermined thickness and with a gap between the noise absorbing material and an inner surface of the blank. In such a case, the method may further comprise the step of pressing the noise absorbing material after the step of filling the blank.

When thermoplastic resin, natural rubber, synthetic rubber or mixture of at least two thereof is used as the noise absorbing material, the step of preparing the noise absorbing material may comprise the step of cutting the noise absorbing material in a size and shape so that it is interference- fitted into the blank. In addition, the step of filling the blank may include the step of interference-fitting the noise absorbing material into the blank.

When thermoplastic resin, natural rubber, synthetic rubber or mixture of at least two thereof is used as the noise absorbing material, the step of preparing the noise absorbing material may comprise the steps of cutting the noise absorbing material in a size and shape so that it is wider than the blank and placing a surface of the wheel body to cover the blank with the noise absorbing material. In addition, the step of filling the blank may include the step of cutting the noise absorbing material and simultaneously inserting it into the blank by a pressing process.

### BRIEF DESCRIPTION OF THE DRAWINGS

The above and other objects, features and advantages of the present invention will become apparent from the following description of preferred embodiments given in conjunction with the accompanying drawings, in which:
Fig. 1 is a front view showing a general cutting wheel;
Fig. 2 is a front view showing a variety of conventional cutting wheels with blanks;
Fig. 3 is a front view showing a conventional cutting wheel in which holes formed in a wheel body are filled with metal powder;
Fig. 4 is a perspective view showing a sandwich type cutting wheel for reducing noise;

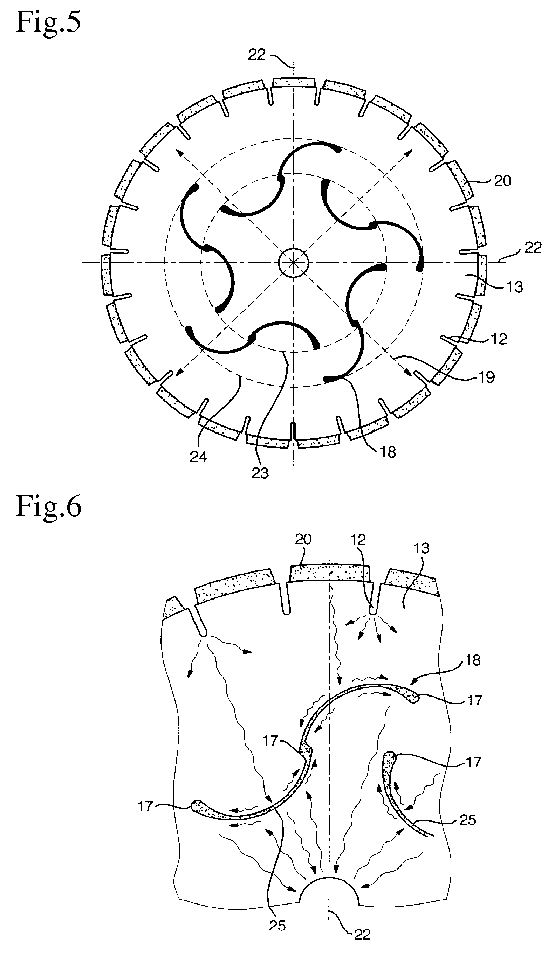

Fig. 5 is a front view showing a cutting wheel with blanks according to the present invention;
Fig. 6 is a view showing the operation of the cutting wheel with blanks shown in Fig. 5;

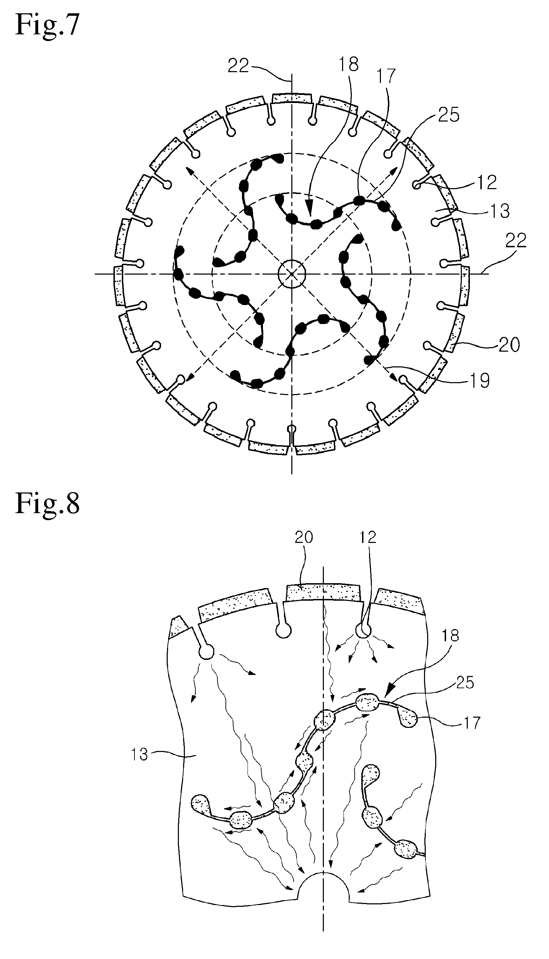

Fig. 7 is a front view showing a cutting wheel with blanks having a plurality of wider portions according to the present invention;
Fig. 8 is a view showing the operation of the cutting wheel with blanks shown in Fig. 7;

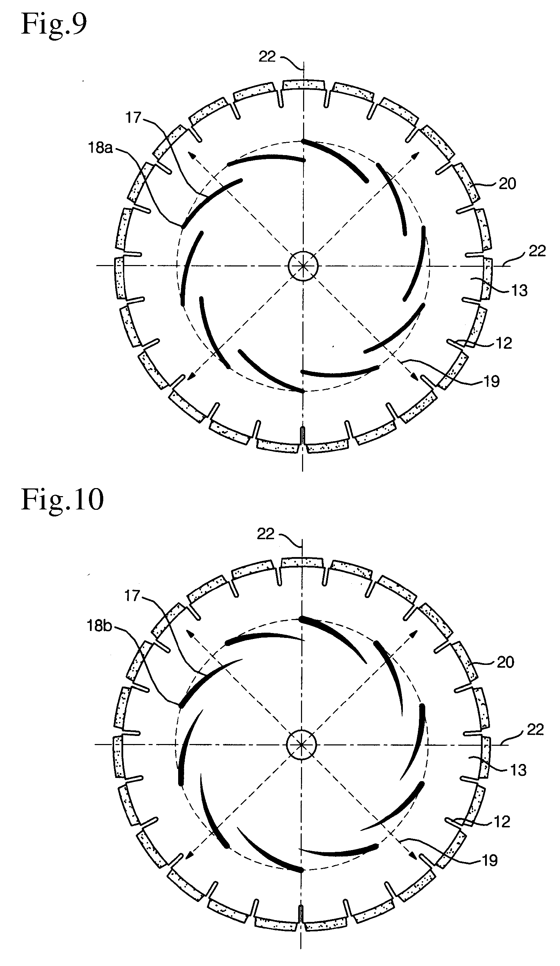

Figs. 9 to 13 are front views showing a variety of embodiments of the cutting wheel with blanks according to the present invention;

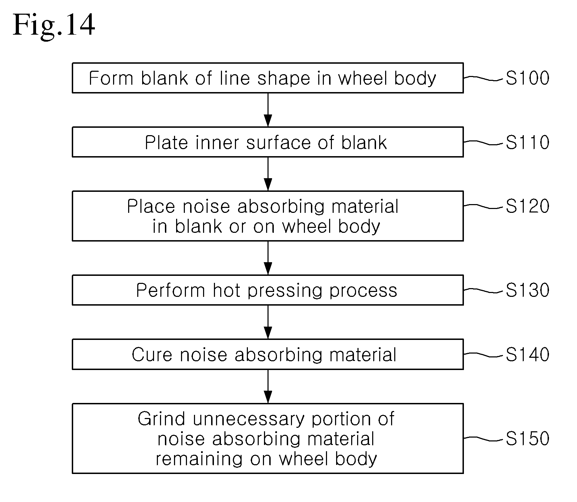

Fig. 14 is a flow chart illustrating a manufacturing process of a cutting wheel with blanks according to one embodiment of the present invention;

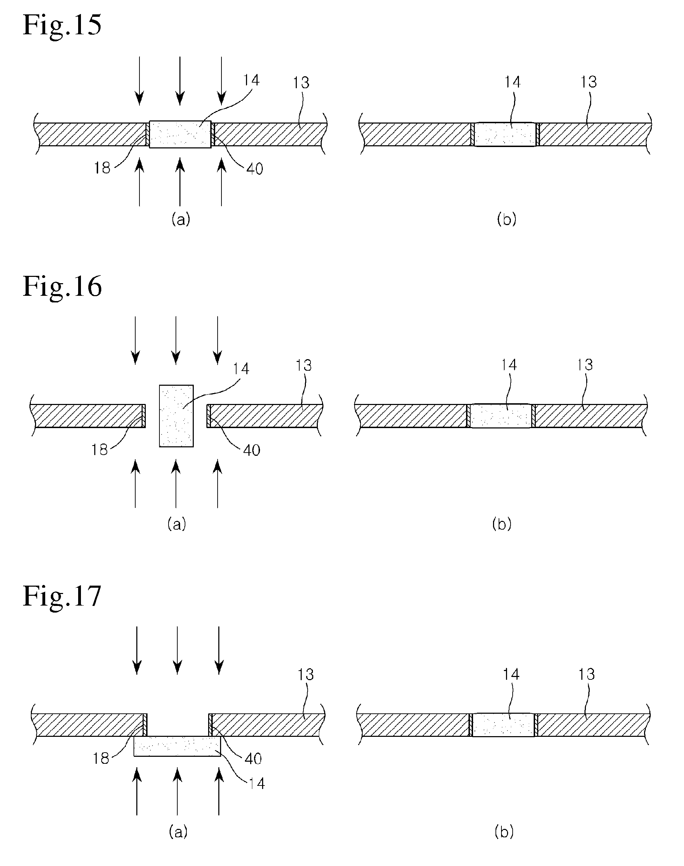

Figs. 15 to 17 are views showing processes of filling the blanks of the cutting wheel with blanks with noise absorbing material according to the manufacturing process of Fig. 14;

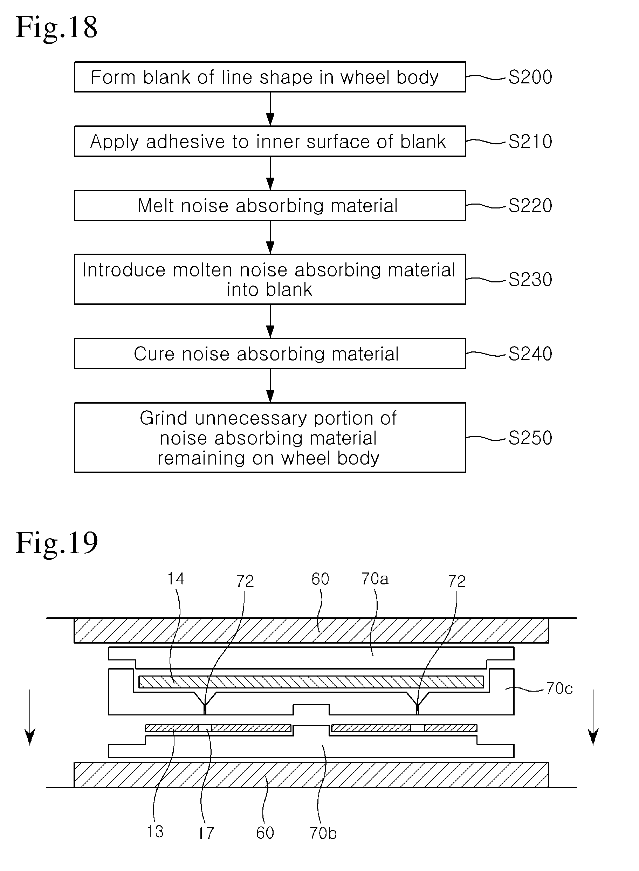

Fig. 18 is a flow chart illustrating a manufacturing process of a cutting wheel with blanks according to another embodiment of the present invention; and
Fig. 19 is a view showing a process of filling the blanks of the cutting wheel with blanks with noise absorbing material according to the manufacturing process of Fig. 18.

### DETAILED DESCRIPTION OF THE PREFERRED EMBODIMENT

Hereinafter, preferred embodiments of the present invention will be described in detail with reference to the accompanying drawings.

Fig. 5 is a front view showing a cutting wheel with blanks according to the present invention.

As compared with blanks formed in a conventional cutting wheel are shaped in a narrow line with a constant width, which has a limitation to the absorption of the frictional noise and vibration, there is a feature in that each of blanks 18 of the cutting wheel according to the present invention comprises narrower portions 25 which are shaped in a line with a constant width and wider portions 17 which are wider than the narrower portions and continuously connected thereto. That is, the blanks 18 are formed so as to block and absorb the frictional noise when the frictional noise caused from the contact between cutting tip s 20 of the wheel body 13 and the workpiece is propagated from the circumference to the center. The wider portions 17 are formed at both ends and the center of the blank 18, so as to absorb the noise and vibration blocked by the narrower portions 25 and block the noise and vibration propagated from the circumference.

The blanks 18 are more preferably arranged circumferentially so that the wider portions 17 formed at the center and an end of each of the blanks 18 of the "S" shape are positioned on a concentric circle 23 and the wider portions 17 formed at the other opposite end of each of the blanks 18 is positioned on another concentric circle 24, as shown in Fig. 5.

In addition, another feature of the blanks 18 of the present invention is in their arrangement. As shown in Fig. 5, the cutting wheel with blanks according to the present invention is manufactured by forming the blanks 18 by a laser cutting or press punching method so that the blanks 18 are intersected by any radial line 19 from a center 22 of a wheel body 13. That is, it is preferred that the blanks 18 be formed so that when any one radial line is drawn from the center 22 toward the circumference of the wheel body 13, the radial line intersects at least one of the blanks 18. The blanks 18 are fundamentally formed in a curved line such as an "S" shape. It is natural that the shapes of the blanks 18 be variously modified. In addition, the number of the blanks 18 may also be selected properly in consideration of degrees of noise occurrence and strength of the cutting wheel in accordance with use of the cutting wheel.

Particularly, it is important to form the blanks so that a single radial line intersects one ends of two blanks adjacent to each other. That is, an end of one of the blanks overlaps with an end of the adjacent one thereof in the radial direction of the cutting wheel. It is for the purpose of blocking all the noises generated from impact and friction due to contact between the cutting wheel and a workpiece and propagated during use of the cutting wheel. That is, if an end of one of the blanks does not overlap with an end of the adjacent one thereof, a noise and vibration generated at such a portion is propagated through the wheel body 13, and the frictional noise occurs. However, on the basis of the consideration of strength of the wheel body 13, the blanks 18 are formed so that an overlapping distance between two blanks adjacent to each other is properly designed.

In the present invention, the five blanks 18 of the "S" shape are formed so as to be equiangularly spaced around the center 22 of the wheel body However, the number of the blanks 18 may be selected on the basis of the consideration of degrees of frictional noise and strength applied to the wheel body 13 in accordance with an environment in which the cutting wheel is used as described above.

Furthermore, the blanks 18 according to the present invention has an additional feature in that the blanks 18 are filled with noise absorbing material. That is, the blanks 18 are filled with the noise absorbing material so that the blanks 18 formed in the wheel body 13 as above more improve the noise reducing capacity and an aesthetic appearance of the cutting wheel.

Fig. 6 is a view showing an operation of the cutting wheel with blanks according to the present invention

If the cutting wheel with blanks according to the present invention is used for cutting or processing a workpiece, the frictional noise and vibration is generated from the workpiece.

As shown in Fig. 6, the impact and the frictional noise and vibration generated between the workpiece and the cutting tips 20 are propagated from gaps 12 or lower portions of the cutting tips 20 to the center 22 of the cutting wheel via the wheel body 13. Then, some of the noise and vibration is reflected at a fastening hole for fastening the cutting wheel to an electric power device and then directed to the circumference of the cutting wheel. Thus, destructive and constructive interference between the propagated and reflected noises and vibrations occurs, causing a noise to increase at specified frequencies. Therefore, in the present invention, the impact and frictional noise and vibration is blocked by the blanks 18, which are formed in the wheel body 13 so that the blanks 18 are intersected by all of the radial lines 19 from the center 22 toward the circumference of the wheel body 13 in order for the noise and vibration not to be propagated anymore. That is, the frictional noise and vibration, which is propagated to the center 22 of the cutting wheel, is blocked by the narrower portions 25 of the blanks 18 of the present invention Then, the blocked frictional noise and vibration is propagated to the wider portions 17 formed at both sides of each the narrower portions 25 and is absorbed thereat. Since the wider portions 17 have a larger area and thus are filled with a larger amount of the noise absorbing material than the narrower portions 25, the noise and vibration can be effectively absorbed.

Although all the wider and narrower portions 17 and 25 of the blanks 18 function to block and absorb the noise and vibration, the main functions thereof are mainly described herein. The wider portions 17 may be formed at more positions according to the environment in which the cutting wheel is used.

Fig. 7 is a front view showing the cutting wheel with blanks having a plurality of wider portions according to the present invention, and Fig. 8 is a view showing an operation of the cutting wheel with blanks shown in Fig. 7.

A plurality of blanks 18 shown in Figs. 7 and 8, each of which has a modified shape of the blank of Figs. 5 and 6, are arranged in a body of a cutting wheel. The blank 18 comprises narrower portions 25 of straight or curved line with a constant width and wider portions 17 formed to be thicker than the narrower portions 25, wherein the narrower portions 25 and the wider portions 17 are alternately connected to each other. As compared with the cutting wheel of Figs. 5 and 6, since the cutting wheels shown in Figs. 7 and 8 have an increased number of the wider portions, the present cutting wheel cause the noise to be reduced but the strength of the wheel body is deteriorated. However, since there is no difference in the operation and effect, the detailed description will be omitted.

Figs. 9 to 13 are front views showing a variety of embodiments of the cutting wheel with blanks according to the present invention.

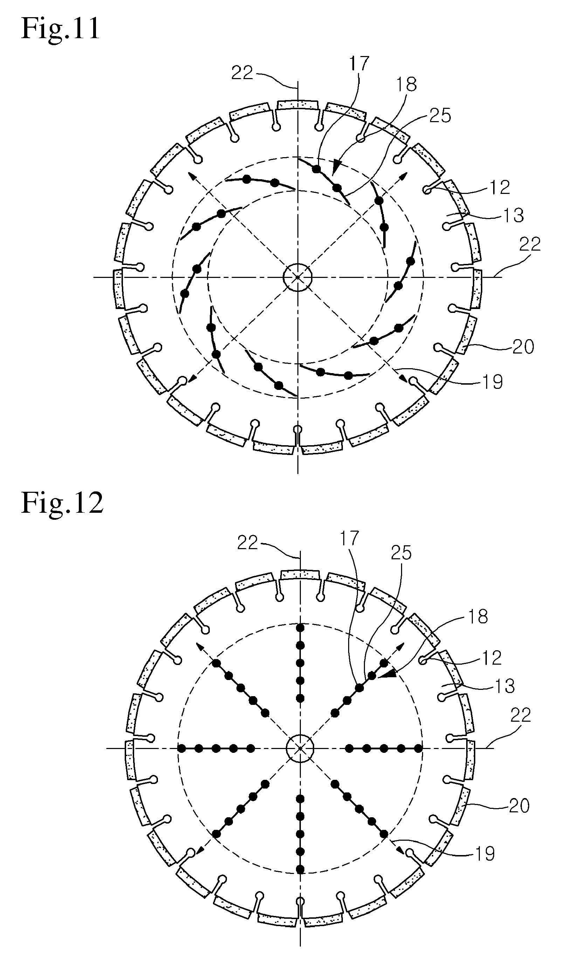

As shown in Fig. 9, blanks 18a having a constant width may be slantingly formed in the wheel body 13 along the circumferential direction so that the blanks 18a are intersected by all of the radial lines 19 of the wheel body 13, wherein the blanks 18a may be filled with the noise absorbing material. Furthermore, as shown in Fig. 10, blanks 18b may be slantingly formed in the wheel body 13 equiangularly along the circumferential direction so that the blanks 18b are intersected by all of the radial lines 19 of the wheel body 13, wherein a width of each blank 18b becomes narrow uniformly along its lengthwise direction and the blanks 18b may be filled with the noise absorbing material. In addition, the blank shown in Fig. 9 may be formed with the wider portions as shown in Fig. 11.

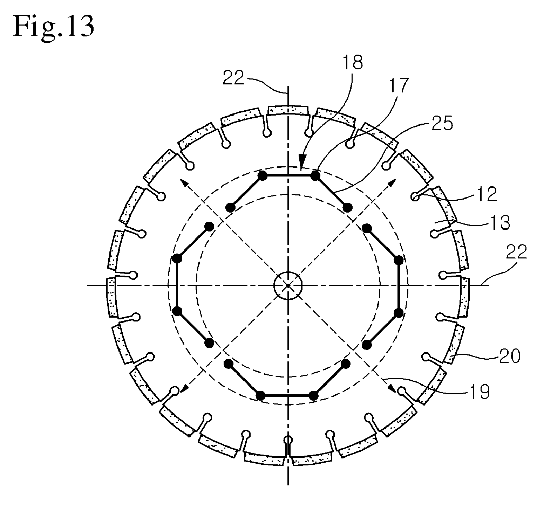

As shown in Figs. 12 and 13, the blanks according to the present invention is not necessarily arranged so that the blanks are intersected by all of the radial lines 19 of the wheel body 13. That is, those skilled in the art should note that the shape and arrangement of the blanks are not limited thereto.

Fig. 14 is a flow chart illustrating a manufacturing process of a cutting wheel with blanks according to one embodiment of the present invention

The manufacturing process of the cutting wheel according to the present embodiment of the present invention comprises steps S100 and S110 of forming at least one blank in a wheel body, a step S120 of preparing noise absorbing material to be filled in the blank, and steps S130 to S150 of filling the blank with the noise absorbing material. Here, it is noted that the step of filling the blank with the noise absorbing material is a concept including processes of introducing the noise absorbing material with deformability into the blanks, curing the noise absorbing material and fixing it in the blanks, and grinding unnecessary portions of the noise absorbing material remaining on surfaces of the wheel body.

In order to manufacture a cutting wheel with blanks according to the present embodiment comprising the above steps, portions of a wheel body are first cut by a laser or press cutting method to form a blank having a shape as shown in Figs. 5 to 13 (step S100). Then, in order to securely fill the blank with the noise absorbing material, a plating layer of brass or copper is formed on an inner surface of the blank or adhesive is applied to the inner surface (step S110). Thereafter, in order to minimize unnecessary portions of the noise absorbing material remaining on outer surfaces of the wheel body after filling the blank with the noise absorbing material, the noise absorbing material including natural rubber, synthetic rubber, thermoplastic resin or the like is cut according to the size and shape of the blank. Here, the noise absorbing material is cut in a size and shape so that it is interference-fitted into the blank, is inserted into the blank with a gap between the noise absorbing material and the inner surface of the blank, or covers the whole of the blank (step S120). Such a step S120 of preparing the noise absorbing material as above will be described in detail below referring to other figures.

Next, a hot pressing process for securely filling the blank with the noise absorbing material is performed by applying heat and pressure to the wheel body and the noise absorbing material prepared in step S120 (step S130). The noise absorbing material, which is in a molten or semi-molten state by the heat and pressure, is cured (step S140). After step S140, the cutting wheel with blanks is completely manufactured by grinding unnecessary portions of the noise absorbing material remaining on the surfaces of the wheel body which is generated by compression during the hot pressing process (step S150).

Figs. 15 to 17 are views showing processes of filling the blanks of the cutting wheel with blanks with noise absorbing material according to the manufacturing process of Fig. 14.

Fig. 15 (a) shows that the noise absorbing material 14 in a solid state is interference-fitted into the blank 18 formed in the wheel body 13, wherein the noise absorbing material 14 is cut in step S120 of preparing the noise absorbing material so that it has a size and shape to be interference-fitted into the blank. Fig. 15 (b) shows that the noise absorbing material 14 of Fig. 15 (a) is subjected to the hot pressing process according to step S130 and then completely filled in the blank 18. Since the noise absorbing material 14 such as a rubber in solid state has elasticity, which makes it possible for the noise absorbing material 14 to be interference-fitted into the blank 18, the hot pressing process can be stably performed while the noise absorbing material 14 is fixed in the blank 18. At this time, it is preferred that a plating layer 15 of brass or copper be formed on the inner surface of the blank 18, in order for the blank 18 to be securely filled with the noise absorbing material 14.

Fig. 16 (a) shows that the noise absorbing material 14 in a solid state is inserted into the blank 18 formed in the wheel body 13, wherein the noise absorbing material 14 is cut in step S120 of preparing the noise absorbing material so that it has a size and shape to be inserted into the blank with the gap and a predetermined thickness. Here, the gap means an appropriately spaced distance between the noise absorbing material and the inner surface of the blank, as shown in Fig. 16 (a). The predetermined thickness means a thickness or more which causes the whole of the noise absorbing material to be fully filled in the blank without residue after the noise absorbing material is deformed and fills up the gap. Fig. 16 (b) shows that the noise absorbing material 14 of Fig. 16 (a) is subjected to the hot pressing process according to step S130 and then completely filled in the blank 18. Since the noise absorbing material 14 such as a rubber in solid state is changed to plastic state by the heat and pressure, the noise absorbing material 14 can be deformed laterally to be filled in the blank 18 by applying the heat and pressure upward and downward while the noise absorbing material 14 is inserted in the blank with the allowance gap between the noise absorbing material and the inner surface of the blank, as shown in the figure. At this time, it is preferred that a plating layer 15 of brass or copper be formed on the inner surface of the blank 18, in order for the blank 18 to be securely filled with the noise absorbing material 14.

Fig. 17 (a) shows that the noise absorbing material 14 in a solid state is placed on a lower surface of the wheel body 13 while covering the blank 18, wherein the noise absorbing material 14 is cut in step S120 of preparing the noise absorbing material so that it has a size and shape wider than that of the blank 18 formed in the wheel body 13. Fig. 17 (b) shows that the noise absorbing material 14 of Fig. 17 (a) is subjected to the hot pressing process according to step S130 and then completely filled in the blank 18. Since the noise absorbing material 14 such as a rubber in solid state can be deformed by the heat and pressure, the noise absorbing material 14 is cut and simultaneously inserted by the heat while being pushed by the pressure, as if the noise absorbing material 14 is punched by the blank 18, and thus can be filled in the blank 18. Such a method results in a great loss of the noise absorbing material 14. However, since the present method can cause the manufacturing time to reduce as compared with the methods illustrated in Figs. 15 and 16, it is suitable for mass production.

Fig. 18 is a flow chart illustrating a manufacturing process of a cutting wheel with blanks according to another embodiment of the present invention

The manufacturing process of the cutting wheel according to the present embodiment of the present invention comprises steps S200 and S210 of forming at least one blank in a wheel body, step S220 of preparing noise absorbing material and melting it, and steps S230 to S250 of filling the blank with the noise absorbing material molten in the previous step. Here, it is noted that the step of filling the blank with the noise absorbing material is a concept including processes of introducing the noise absorbing material with fluidity into the blanks, curing the noise absorbing material and fixing it in the blanks, and grinding unnecessary portions of the noise absorbing material remaining on surfaces of the wheel body.

In order to manufacture a cutting wheel with blanks according to the present embodiment comprising the above steps, portions of a wheel body are first cut by a laser or press cutting method to form a blank having a shape as shown in Figs. 5 to 13 (step S200). Then, in order to securely fill the blank with the noise absorbing material, a plating layer of brass or copper is formed on an inner surface of the blank or adhesive is applied to the inner surface (step S210). Thereafter, the noise absorbing material, such as natural rubber, synthetic rubber, or thermoplastic resin which can be fluid by heat and pressure, is molten (step S220). Next, the noise absorbing material molten in step S220 is introduced in the blank (step S230) and then reacts with the adhesive or plating layer previously formed, so that the blank is filled with the noise absorbing material. The detailed description concerning the step S230 will be described in detail below referring to other figure. The noise absorbing material, which is filled in the blank in a molten or semi-molten state by the heat and pressure, is cured (step S240). After step S240, the cutting wheel with blanks is completely manufactured by grinding unnecessary portions of the noise absorbing material remaining on the surfaces of the wheel body which is generated by compression during the hot pressing process (step S250).

Fig. 19 is a view showing a process of filling the blanks of the cutting wheel with blanks with noise absorbing material according to the manufacturing process of Fig. 18.

Fig. 19, which is a view for concretely explaining the embodiment shown in Fig. 18, shows an apparatus capable of injecting the molten noise absorbing material in the blank. Such an apparatus comprises an upper mold 70a, a lower mold 70b, and a middle mold 70c positioned between the upper and lower molds 70a and 70b. The noise absorbing material 14 in a molten or semi-molten state is filled between the upper and middle molds 70a and 70c. The wheel body is placed between the middle and lower molds 70c and 70b. Nozzles 72 for injecting the molten noise absorbing material 14 into the blank of the wheel body are formed in the middle mold 70c. Hot plates 60 for transferring heat to the molds 70a to 70a are provided on the upper and lower portion of the upper and lower molds 70a and 70b.

The nozzles 72 are bored through the middle mold 70c at positions corresponding to the blanks of the wheel body. Thus, the noise absorbing material 14 with fluidity is injected and filled in the blanks through the nozzle 72. Here, it is preferred that if the nozzles 72 are provided at positions corresponding to the wider portions of the respective blanks, the noise absorbing material first flow into the wider portions through the nozzles 72, gradually flows into the narrower portions, and then is filled in the blanks.

After the blank is filled with the noise absorbing material, the noise absorbing material is gradually cured by keeping it at about 200? for about five minutes. Then, the noise absorbing material mutually reacts with the plating or adhesive layer formed before the pressing process, so that the noise absorbing material is firmly filled in the blank.

Next, the cutting wheel with blanks of the present invention may be manufactured by a method according to an additional embodiment of the present invention.

In the present embodiment, the noise absorbing material may comprise any one selected out of urethane, thermosetting resin, and metal powder. The urethane and/or thermosetting resin may be mixed with the metal powder for the aesthetic appearance of the cutting wheel. Also, the blanks 18 may be filled solely with the metal powder. Any metal powder having a required, predetermined melting point or unique color may be used as the metal powder to be filled. However, copper or copper alloy powder is preferably used.

In order to fill blanks 18 of the wheel body 13 with the urethane and/or thermosetting resin as the noise absorbing material and cure the filler, the urethane, thermosetting resin, or metal powder is mixed with hardening agent at a predetermined ratio, for example, 1:1. After the blanks 18 are filled with the mixture, the mixture is cured by heating it for 1 to 6 hours at 70 to 150 °C. Since adhesive strength between the inner surface of the blank 18 and the urethane and/or thermosetting resin is low, the blank 18 is filled with the mixture containing the urethane and/or thermosetting resin after adhesive is applied onto the inner surface of the blank 18.

Furthermore, the urethane or thermosetting resin and the hardening agent mixed at 1:1 may also be mixed with copper powder of 1.5 times thereof, and then, the blanks 18 are filled with said mixture and the mixture is cured by heating. The blanks 18 may be filled with the metal powder such as copper or copper alloy powder without the urethane or thermosetting resin and the filler is cured by pressing and sintering.

In order to evaluate the cutting wheel according to the present invention, tests for measuring the noise of the various cutting wheels were performed. The cutting wheels as described in Table 1 were prepared.

**Table 1**

| Wheels to Be Tested | | | |
|---|---|---|---|
| Wheel No. | Wheel Type | Reference Figure | Note |
| 1 | General Wheel | Fig. 1 | - |
| 2 | Conventional Wheel with blank | Fig. 2 (b) | Filled with Silicone |
| 3 | Conventional Wheel with blank | Fig. 2 (c) | Filled with Silicone |
| 4 | Sandwich Type Wheel | Fig. 4 | Steel Plates & Copper Plate |
| 5 | Present Invention | Fig. 5 | Filled with Urethane & Copper Powder |

In order to measure the noise of the cutting wheels, a sound level meter, for example, NA-27 of RION CO., LTD. of Japan, was installed at 1 meter from the cutting wheel to be tested and at the level of the center of the cutting wheel. The cutting wheel was mounted to a cutting machine, for example, CEDIMA TABLE SAW CTS-60, which has 3 horsepowers and a maximum speed of 3600 rpm. In addition, a completely cured concrete block of 300mm x 300mm x 40mm was used as a workpiece.

For the noise test, dry cutting was performed 10 times for each cutting wheel. The noise was measured for 10 seconds by using the sound level meter while the workpiece was cut, and then, the test results were averaged for each cutting wheel. The test results are described in Table 2 below.

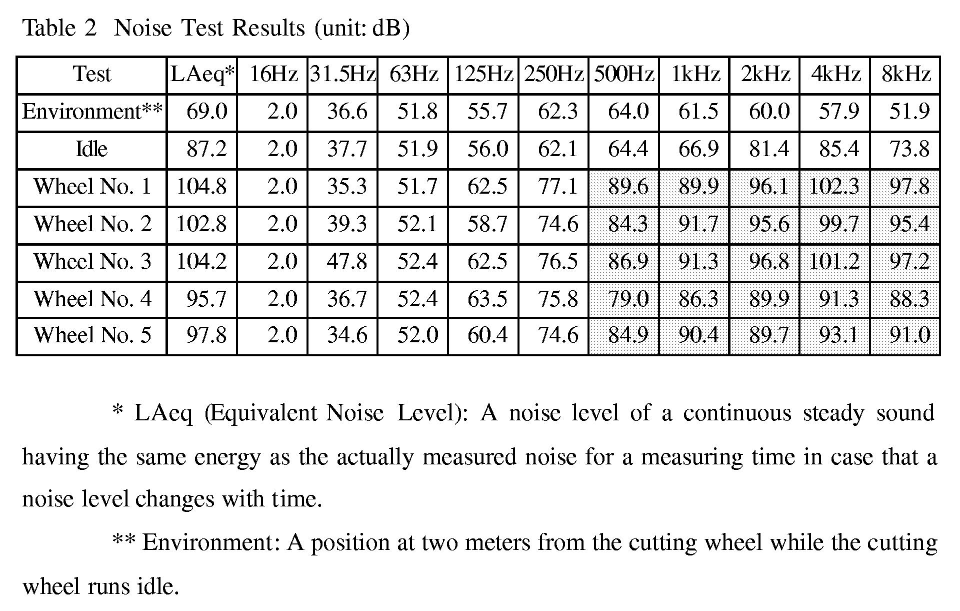

Comparison and analysis results of the LAeq values for the above results are described in Table 3 below.

**Table 3**

| Comparison and Analysis of Equivalent Noise Level | | | | |
|---|---|---|---|---|
| Wheel No. | Laeq (dB) | Difference in dB* (with respect to Wheel No. 1) | Sound Pressure Ratio** (with respect to Wheel No. 1) | Comparison of Noise (Sound Pressure) |
| 1 | 104.8 | - | - | 100 |
| 2 | 102.8 | -2.0 | 10^{-0.2} = 0.63 | 63 |
| 3 | 104.2 | -0.6 | 10^{-0.06} = 0.87 | 87 |
| 4 | 95.7 | -9.1 | 10^{-0.91} = 0.12 | 12 |
| 5 | 97.8 | -7.0 | 10^{-0.7} = 0.20 | 20 |

| | | | | |
|---|---|---|---|---|
| * Definition of dB (Decibel) dB = 10 log(P1/P0 , wherein P1 is a measured sound pressure, and P0 is a reference sound pressure, 2 x 10⁻⁵ N/m² | | | | |
| ** Formula for converting Difference in dB into Sound Pressure Ratio 10^{[Difference in dB]/10} = Sound Pressure Ratio | | | | |

For example, although the difference between 80dB and 100dB is 20dB, the sound pressure ratio is 10^{20/10} = 10² = 100. That is, a sound volume (sound pressure) of 100dB is 100 times of that of 80dB.

As shown in Table 2 which shows the analysis results according to frequency, the sound levels for the conventional cutting wheels with blank and the sandwich type cutting wheel do not particularly decrease in the frequency band below 250Hz, but effectively decrease above 500Hz, which is indicated in a shaded portion. Amounts of the decreases for the cutting wheels correspond to order of the noise reducing effects (Wheel 4 ? 5 ? 2 ? 3 as described above.

In addition, upon review of the differences in sound level with respect to Wheel 1, Wheel 4, i.e., the sandwich type cutting wheel, is most superior, and Wheel 5, i.e., the cutting wheel of the present invention, is next superior, as shown in Table 3. Next, the noise reducing effect is worse in order of Wheels 2 and 3. That is, among Wheels 2 and 3 in which the conventional blanks are filled with silicone, Wheel 3 has an unsuitable shape of the blanks due to the small noise reducing effect, and Wheel 2 shows the noise reducing effect better than Wheel 1, i.e., the general plane type cutting wheel, by average about 2dB.

Furthermore, as shown in the test results of the equivalent noise level (LAeq), Wheel 5 shows the noise reducing effect better than Wheel 1 by 7dB and than Wheels 2 and 3 by about 5 dB. In addition, Wheel 5 shows the noise reducing effect worse than Wheel 4 by about 2dB.

However, since Wheel 3 shows no noise reducing effect in the frequency band above 500Hz, the shape of blanks of Wheel 3 is not suitable. That is, since the blanks of Wheel 2 are formed in the circumferential direction of the wheel body as shown in Fig. 2 (b), the noise reducing effect is exhibited to some degree. However, since the blanks of Wheel 3 are formed in the radial direction of the wheel body as shown in Fig. 2 (c), it is hard to block the noise generated from the cutting wheel. Thus, it is noted that the noise reducing effect of Wheel 3 is remarkably worse compared with the other cutting wheel. Accordingly, the above test results are supporting evidence experimentally showing that it is proper to form the blanks which intersect all of the radial lines from the center of the wheel body in order to block and absorb the noise as in the present invention

Furthermore, in Wheels 2, 4, and 5, the general average noise level (dB) is reduced by reducing the noise level in the high frequency band. Due to this, it is noted that noise reducing effect which is practically sensed by a user is better than the noise reducing effect which is numerically shown as above.

The cutting wheel with blanks according to the present invention shows the effective noise reducing effect as compared with the conventional cutting wheels, which is the reason why the blanks 18 of the cutting wheel according to the present invention always intersect all of the radial lines 19 from the center to the circumference of the cutting wheel, improving noise blocking effect. In addition, the noise reducing effect is also improved by filling the blanks 18 with the noise absorbing material such as urethane. Particularly, since each of the blanks 18 consists of the wider and narrower portions 17 and 25, the noise is more effectively blocked and absorbed.

That is, it is well known that the noise, which is generated since the diamond cutting tips 20 and the wheel body 13 generate the impact and/or friction together with the workpiece, is mainly generated at the gaps 12 formed in the wheel body 13. Accordingly, the generated noise is transmitted from the circumference to the center of the cutting wheel, and the transmitted noise to the center is reflected thereat. While the reflected noise is transmitted to the circumference again, an increased noise is generated at specified frequencies. The conventional cutting wheel with blanks, in which the narrow blanks are formed in the wheel body in a line shape by laser cutting and filled with silicone, has the problems in that the silicone with which the blanks is filled is easily removed during the use and the noise reducing effect does not largely improved due to the line shaped narrow blanks.

Therefore, the feature of the present invention is in the blanks 18 consisting of the wider and narrower portions 17 and 25 instead of the uniformly narrow blanks. In addition, the blanks 18 are filled with the noise absorbing material such as thermoplastic resin, natural rubber, synthetic rubber, the urethane, thermosetting resin, metal powder, or the mixture of the urethane or thermosetting resin and the metal powder, instead of the silicone, and the noise absorbing material is cured. Thus, the noise absorbing material is prevented from being removed during the use of the cutting wheel. Further, since the blanks 18 intersect all of the radial lines from the center to the circumference of the cutting wheel, the noise reducing effect can be considerably improved as good as the conventional sandwich type cutting wheel.

As described above, according to the present invention, the blanks of the cutting wheel are formed so that the blanks intersect all of the radial lines from the center to the circumference of the cutting wheel and each of the blanks consists of the wider and narrower portions in order to block and absorb the noise. Thus, the noise and vibration is considerably decreased as compared with the general plane type cutting wheel and the conventional cutting wheel with blanks. In addition, while the cutting wheel with blanks according to the present invention can absorb the noise and vibration as good as the sandwich type cutting wheel having the superior noise reducing effect, the cutting wheel of the present invention is considerably high in strength and is inexpensive to manufacture with 1/2 to 1/3 costs compared with the sandwich type cutting wheel.

The scope of the present invention is not limited to the embodiments described and illustrated above but is defined by the appended claims. It will be apparent that those skilled in the art can make various modifications and changes thereto within the scope of the invention defined by the claims. Therefore, the true scope of the present invention should be defined by the technical spirit of the appended claims.

The present application contains subject matter related to Korean Patent Application Nos. 10-2004-0015191 and 10-2004-0076567, the entire contents of which are incorporated herein by reference.

## Claims

1. A cutting wheel of which a wheelbody is formed with at least one blank,
wherein the blank is shaped in a line with a variable width, and the blank is filled with noise absorbing material.

2. The cutting wheel as claimed in claim 1, wherein there are a plurality of the blanks, and any radial line of the wheel body intersects at least one of the blanks.

3. The cutting wheel as claimed in claim 1, wherein one ends of two of the blanks adjacent to each other are intersected by any one radial line of the wheel body.

4. The cutting wheel as claimed in claim 1, wherein the blank comprises narrower portions shaped in a line with a constant width and wider portions wider than the narrower portions, the narrower portions and the wider portions are alternately arranged.

5. The cutting wheel as claimed in claim 4, wherein the wider portions are provided at both ends and a center of the blank.

6. The cutting wheel as claimed in claim 1, wherein the noise absorbing material includes urethane, thermosetting resin, thermoplastic resin, metal, natural rubber, synthetic rubber or mixture of at least two thereof.

7. The cutting wheel as claimed in claim 6, wherein the metal includes copper or copper alloy powder.

8. The cutting wheel as claimed in claim 1, wherein a plating or adhesive layer is formed on an inner surface of the blank.

9. The cutting wheel as claimed in claim 1, wherein the blank is shaped in a curved line.

10. A method for manufacturing a cutting wheel, comprising steps of:
forming at least one blank, the blank being shaped in a line with a variable width;
preparing noise absorbing material to be filled in the blank; and
filling the blank with the noise absorbing material.

11. The method as claimed in claim 10, wherein there are a plurality of the blanks, and any radial line of a wheel body of the cutting wheel intersects at least one of the blanks.

12. The method as claimed in claim 10, further comprising the step of forming a plating or adhesive layer on an inner surface of the blank before the blank is filled with the noise absorbing material.

13. The method as claimed in claim 10, wherein the step of preparing the noise absorbing material comprises the step of mixing at least one of urethane, thermosetting resin, and metal powder and hardening agent at a ratio of 1:1, the method further comprising the step of curing the noise absorbing material after the step of filling the blanks with the noise absorbing material.

14. The method as claimed in claim 12, wherein the step of preparing the noise absorbing material comprises the steps of mixing at least one of urethane and thermosetting resin and hardening agent at a ratio of 1:1 and mixing it with metal powder at a ratio of 1:1.5, the method further comprising the step of curing the noise absorbing material after the step of filling the blanks with the noise absorbing material.

15. The method as claimed in claim 13, wherein the step of curing the noise absorbing material includes the step of heating the noise absorbing material for 1 to 6 hours at 70 to 150 °C.

16. The method as claimed in claim 14, wherein the step of curing the noise absorbing material includes the step of heating the noise absorbing material for 1 to 6 hours at 70 to 150 °C.

17. The method as claimed in claim 10, wherein the step of preparing the noise absorbing material comprises the step of melting the noise absorbing material to flow into the blank, the method further comprising the step of curing the molten noise absorbing material after the step of filling the blank.

18. The method as claimed in claim 10, wherein the noise absorbing material includes thermoplastic resin, natural rubber, synthetic rubber or mixture of at least two thereof, the step of preparing the noise absorbing material comprising the step of cutting the noise absorbing material with a predetermined thickness and with a gap between the noise absorbing material and an inner surface of the blank, the method further comprising the step of pressing the noise absorbing material after the step of filling the blank.

19. The method as claimed in claim 10, wherein the noise absorbing material includes thermoplastic resin, natural rubber, synthetic rubber or mixture of at least two thereof, the step of preparing the noise absorbing material comprising the step of cutting the noise absorbing material in a size and shape so that it is interference-fitted into the blank, and the step of filling the blank including the step of interference-fitting the noise absorbing material into the blank.

20. The method as claimed in claim 10, wherein the noise absorbing material includes thermoplastic resin, natural rubber, synthetic rubber or mixture of at least two thereof, the step of preparing the noise absorbing material comprising the steps of cutting the noise absorbing material in a size and shape so that it is wider than the blank and placing a surface of the wheel body to cover the blank with the noise absorbing material, and the step of filling the blank including the step of cutting the noise absorbing material and simultaneously inserting it into the blank by a pressing process.
